# EUROPEAN PATENT SPECIFICATION

(11) **EP 2 060 209 B1**
(45) Date of publication and mention of the grant of the patent: **19.07.2017**
(21) Application number: 08019745.2
(22) Date of filing: 12.11.2008
(51) Int. Cl.: A47G 1/16, A47H 1/144

(54) **A rail system for hanging objects**
Schienensystem zum Hängen von Objekten
Système de rail pour suspendre des objets

(30) Priority: 14.11.2007 NL 1034688
(43) Date of publication of application: 20.05.2009
(73) Proprietor: Stas IP B.V., 5633 AD Eindhoven (NL)
(72) Inventor: Stas, Marinus Barbara Arnoldus Maria, 5527 GR Hapert (NL)
(74) Representative: Verhees, Godefridus Josephus Maria

(56) References cited:
- ES-A1- 2 234 388
- GB-A- 2 263 439
- NL-A- 8 900 554
- NL-C1- 1 011 935
- "HAND DRAWN CURTAIN TRACK SYSTEMS FROM SILENT GLISS", SILENT GLISS, KENT, GB, no. 76/77, 1 January 1991 (1991-01-01), pages 1-12, XP000122658,

## Description

The invention relates to a rail system for hanging objects such as paintings, prints, curtains and the like according to the preamble of claim 1. Rail systems of this type are known, see ES 2 234 388 A1. The drawback of the known rail system is the fact that the rail must be comparatively wide in order to make it possible to snap the rail onto the mounting heads, because the first recess of the rail must to that end be bent open slightly. In many situations there is a need for a very narrow rail, which preferably must nevertheless be capable of being snapped onto mounting heads. The rail system according to the invention provides a rail system for use with a very narrow rail, which system is characterised in that the edge of the tangentially extending circumferential groove behind which the the sharp knife edge is pressed is a sharp edge. Said knife edge will deform partially elastically and partially inelastically, which is not objectionable because a strong connection is obtained and because usually the rail needs to be snapped onto the mounting heads only once.

Accordingly, another problem of a very narrow rail is the fact that the mounting heads will inevitably be very small. According to the prior art, said mounting heads must be fixed to the wall by means of fixing screws, which is very difficult on account of their small dimensions. An advantageous embodiment of the rail system is therefore characterised in that said fixing means are made up of a mounting head and a fixing screw configured as one integral unit, which is relatively easy to handle and mount. The mounting head is preferably provided with a cavity, into which a crosshead screwdriver or an equivalent tool can be inserted, so that the mounting of the mounting heads can take place in a quick and efficient manner.

An advantageous alternative embodiment is characterised in that said fixing means are made up of a mounting head and a fixing nail configured as one integral unit, so that said unit can be mounted in a simple manner, in a similar manner as a clout.

Another advantageous embodiment, by which a large load-carrying capacity can be obtained even when using a small mounting head and a relatively thin fixing screw, is characterised in that a surface of the mounting head, which abuts against the wall in a position of use, is provided with a conical projecting end that can penetrate into the wall.

Another advantageous embodiment is characterised in that the mounting head has an at least substantially round or elliptical cross-section. A round shape has the advantage that only little force is required for snapping the rail onto the mounting head, whilst the elliptical shape provides a better support for the rail.

In the case of a very narrow rail it may furthermore be somewhat difficult to attach objects to the rail. Another advantageous embodiment that obviates this drawback is characterised in that the rail system further comprises connecting hooks and is provided with a second recess, into which said connecting hooks provided with connecting rods or connecting cables are to be hooked.

It is furthermore immediately apparent that also the connecting hooks and the associated connecting rods or connecting cables must be very thin, so that they will inevitably be somewhat vulnerable. More in particular, there is a chance that an impact *or cleaning* will cause a connecting hook to move out of the rail, which may cause damage to an object suspended therefrom. Another advantageous embodiment by means of which the rail system can be made significantly more robust in a position of use is characterised in that the connecting hooks are each provided with locking means, which prevent the connecting hook from becoming detached from the rail.

According to another aspect of the invention, a simple and aesthetically attractive embodiment is characterised in that said locking means comprise a sleeve, which can be slipped over a connecting rod or a connecting cable and which is provided with a lip, which thus enters a space enclosed by the connecting hook.

The invention will now be explained in more detail with reference to the figures, in which:
Figure 1 schematically shows a rail system according to the prior art;
Figure 2 schematically shows a possible embodiment of a rail system according to the invention;
Figure 3A schematically shows a rail system with a hook in the non-locked position;
Figure 3B schematically shows the rail system with a hook in the locked position.

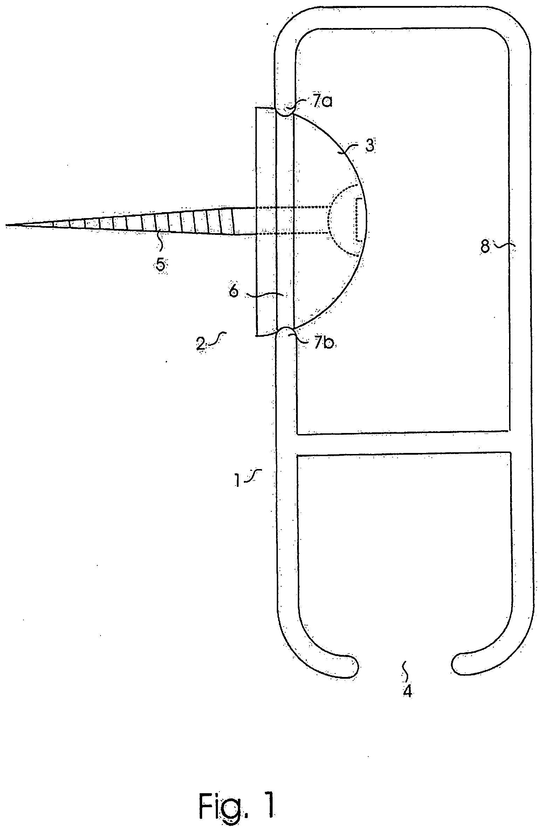

Figure 1 schematically shows a rail system according to the prior art, consisting of a rail 1, for example made of aluminium, provided with a first recess 2, which can be snapped over mounting heads 3, and a second recess 4, into which connecting hooks can be slid. When mounting a rail 1, a row of mounting heads 3 are first fixed to a wall by means of screws 5, after which the rail 1 is snapped into place. The actual snap connection consists of a tangentially extending groove 6 in the mounting head 3 and two rounded edges 7a, 7b, which together form the boundary of the first recess 2. When the rail 1 is being snapped into place, a wall 8 of the rail 1 slightly deflects, so that the first recess 2 becomes slightly wider.

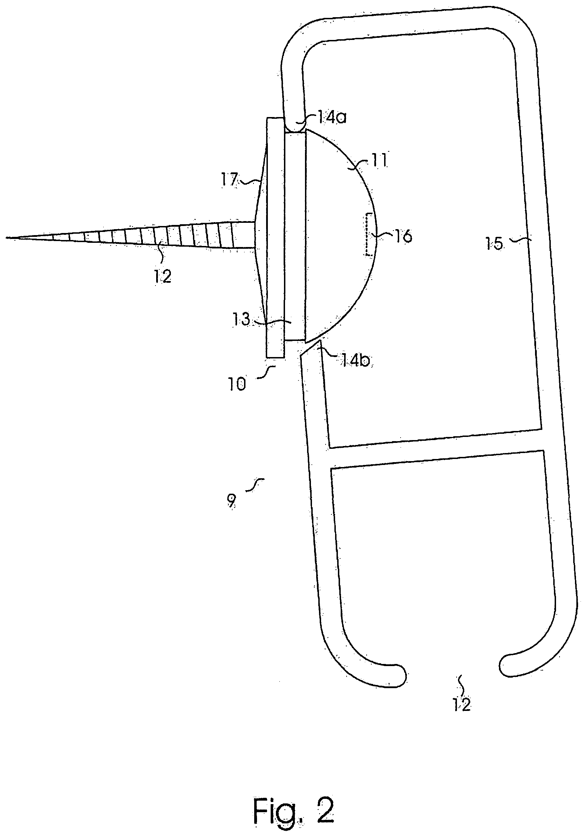

Figure 2 schematically shows a possible embodiment of a rail system according to the invention, consisting of a rail 9, for example made of aluminium, which is much narrower than the rail shown in figure 1. The rail 9 is provided with a first recess 10, which can be snapped over mounting heads 11, and a second recess 12, into which connecting hooks can be slid or hooked.

When mounting a rail 1, a row of mounting products, each consisting of a mounting head 11 that is integral with a screw or nail 12, are first fixed to a wall, after which the rail 9 is snapped into place. The actual snap connection consists of a tangentially extending groove 13 in the mounting head 11, at rounded edge 14a of the first recess 10 and a sharp knife edge 14b of the first recess 10. When the rail is being snapped into place, a wall 15 of the rail 9 hardly deflects. Instead, the sharp knife edge 14b will deform slightly elastically and slightly non-elastically, as a result of which the first recess 10 will locally become slightly wider.

A front side of the mounting head 11 is provided with a cavity 16, into which a crosshead screwdriver or an equivalent tool can be inserted, whilst a rear side of the mounting head 11, which abuts against the wall in a position of use, is provided with a conical projecting part 17, which can penetrate into the wall, thereby enhancing the load-carrying capacity of the mounting head 11. The mounting head 11 shown in the figure is round, but it may also have a different shape resulting in a better distribution of the force exerted on the mounting head 11 by the rail 9.

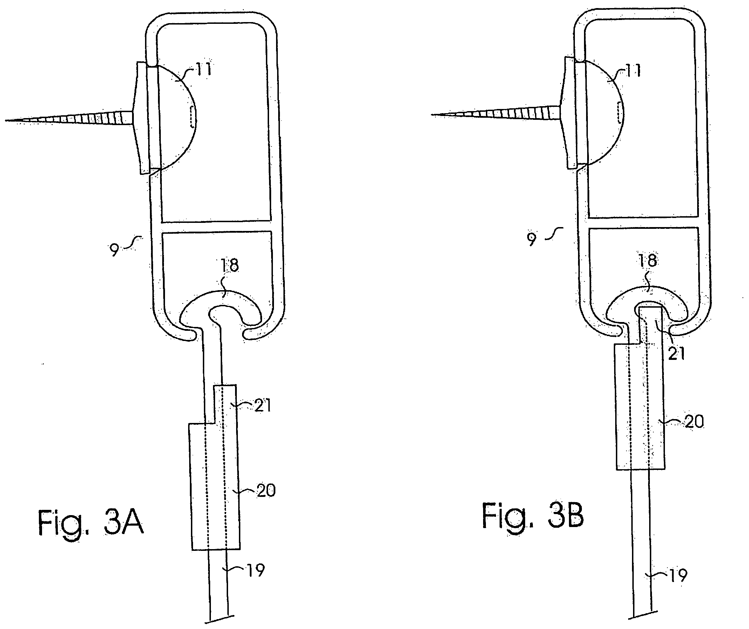

Figure 3A schematically shows a rail system comprising a hook 18 which can be hooked into the rail 9 and which is provided with a carrying bar 19. A sleeve has been slid onto the carrying bar 19, which sleeve is provided with a lip 21, which can be pressed into the space enclosed by the hook 18.

Figure 3B schematically shows the rail system in a situation in which the sleeve 20 has been slid upwards, so that the lip 21 is pressed into the space enclosed by the hook 18. In that situation the hook 18 can no longer be detached from the rail 9 and is locked in position, therefore.

## Claims

1. A rail system for hanging objects such as paintings, prints, curtains and the like, comprising:
* fixing means (12);
* mounting heads (11) provided with a tangentially extending circumferential groove (13), which mounting heads (11) are adapted to be fixed perpendicular to a wall in a row, using said fixing means (12), as well as
* a rail (9) for hanging objects such as paintings, prints, curtains and the like, said rail (9) being provided with a first, longitudinally extending recess having a first edge (14a) and a second edge (14b), which first and second edges (14a, 14b) are to be hooked into the tangentially extending circumferential grooves (13) of the mounting heads (11), said second edge (14b) having a sharp knife edge, which is pressed behind an edge of the tangentially extending circumferential groove (13), **characterized in that** said edge of the tangentially extending circumferential groove (13) is a sharp edge.

2. A rail system according to claim 1, **characterized in that** said fixing means comprises a mounting screw, wherein each mounting head and each mounting screw are configured as one integral unit.

3. A rail system according to claim 2, **characterized in that** the mounting head is provided with a cavity, into which a crosshead screwdriver or an equivalent tool can be inserted.

4. A rail system according to claim 1, **characterized in that** said fixing means comprises a fixing nail, wherein each mounting head and each fixing nail are configured as one integral unit.

5. A rail system according to any one of claims 2-4, **characterized in that** a surface of the mounting head, which abuts against the wall in a position of use, is provided with a conical projecting end that can penetrate into the wall.

6. A rail system according to any one of the preceding claims, **characterized in that** the mounting head has an at least substantially round or elliptical cross-section.

7. A rail system according to any one of the preceding claims, **characterized in that** the rail system further comprises connecting hooks, and wherein the rail is provided with a second recess, into which second recess said connecting hooks provided with connecting rods or connecting cables are to be hooked.

8. A rail system according to claim 7, **characterized in that** the connecting hooks are each provided with locking means, which prevent the connecting hook from becoming detached from the rail.

9. A rail system according to claim 8, **characterized in that** said locking means comprise a sleeve, which can be slipped over a connecting rod or a connecting cable and which is provided with a lip, which thus enters a space enclosed by the connecting hook.

## Patentansprüche

1. Schienensystem zum Aufhängen von Objekten wie Bilder, Stiche, Vorhänge und dergleichen, umfassend:
- Befestigungsmittel (12);
- Befestigungsköpfe (11) mit einer tangential verlaufenden Umfangsnut (13), welche Befestigungsköpfe (11) angepasst sind, um in einer Reihe mit Befestigungsmitteln (12) an einer Wand befestigt zu werden können, sowie
- eine Schiene (9) zum Aufhängen von Objekten wie Bilder, Stiche, Vorhänge und dergleichen, an welcher Schiene (9) sich eine in Längsrichtung verlaufende erste Aussparung mit einem ersten Rand (14a) befindet, welcher erste und zweite Rand (14a, 14b) in die Nuten (13) der Befestigungsköpfe (11) einzuhaken ist, und der zweite Rand (14b) eine Schneidkante besitzt, die hinter einen Rand der tangential verlaufenden Umfangsnut (13) gedrückt wird,
**dadurch gekennzeichnet, dass** der Rand der tangential verlaufenden Umfangsnut (13) ein scharfer Rand ist.

2. Schienensystem gemäß Anspruch 1, **dadurch gekennzeichnet, dass** die Befestigungsmittel eine Befestigungsschraube umfassen, wobei jeder Befestigungskopf und jede Befestigungsschraube als ein integraler Teil ausgeführt sind.

3. Schienensystem gemäß Anspruch 2, **dadurch gekennzeichnet, dass** der Befestigungskopf eine Auskehlung besitzt, in die ein Kreuzschlitzschraubendreher oder ein ähnliches Werkzeug angesetzt werden kann.

4. Schienensystem gemäß Anspruch 1, **dadurch gekennzeichnet, dass** die Befestigungsmittel einen Befestigungsnagel umfassen, wobei jeder Befestigungskopf und jeder Befestigungsnagel als ein integrales Teil ausgeführt sind.

5. Schienensystem gemäß einen der Ansprüche 2-4, **dadurch gekennzeichnet, dass** eine Fläche des Befestigungskopfes, die im Gebrauchszustand an der Wand anliegt, mit einem konisch herausragenden Teil versehen ist, der in die Wand eindringen kann.

6. Schienensystem gemäß einem der obigen Ansprüche, **dadurch gekennzeichnet, dass** der Befestigungskopf einen zumindest nahezu runden oder elliptischen Querschnitt hat.

7. Schienensystem gemäß einem der obigen Ansprüche, **dadurch gekennzeichnet, dass** das Schienensystem ferner Befestigungshaken umfasst, und wobei die Schiene eine zweite Aussparung hat, in die die Befestigungshaken mit Befestigungsstangen oder Befestigungsseile eingehakt werden können.

8. Schienensystem gemäß Anspruch 7, **dadurch gekennzeichnet, dass** jeder Befestigungshaken mit einer Verriegelung versehen ist, die verhindert, dass der Befestigungshaken sich aus der Schiene aushakt.

9. Schienensystem gemäß Anspruch 8, **dadurch gekennzeichnet, dass** die Verriegelung eine Buchse umfasst, die über eine Befestigungsstange oder Befestigungsseile geschoben werden kann, und eine Lasche enthält, die dabei in einen Raum eindringt, der von dem Befestigungshaken umgeben ist.

## Revendications

1. Système de rail pour accrocher des objets tels que des tableaux, des images, des rideaux et d'autres objets similaires, comprenant :
- des moyens de fixation (12) ;
- des têtes de fixation (11) pourvues d'une rainure circonférentielle (13) dépassant de façon tangentielle (13), lesquelles têtes de fixation (11) sont adaptées pour pouvoir être fixées dans une barre sur une paroi à l'aide des moyens de fixation (12), ainsi que
- un rail (9) pour accrocher des objets tels que des tableaux, des images, des rideaux et d'autres objets similaires, lequel rail (9) est pourvu d'une première encoche dépassant dans un sens longitudinal et ayant un premier bord (14a), lesquels premier et deuxième bords (14a, 14b) sont censés s'accrocher dans les rainures (13) des têtes de fixation (11), lequel deuxième bord (14b) possède un côté à lame étant pressé derrière un bord de la rainure circonférentielle (13) dépassant de façon tangentielle (13),
**caractérisé en ce que** le bord de la rainure circonférentielle (13) dépassant de façon tangentielle est un bord coupant.

2. Système de rail selon la revendication 1, **caractérisé en ce que** les moyens de fixation comprennent une vis de fixation, où chaque tête de fixation et chaque vis de fixation sont réalisées en tant qu'une partie intégrale.

3. Système de rail selon la revendication 2, **caractérisé en ce que** la tête de fixation est pourvue d'une cavité dans laquelle peut être placé un tournevis cruciforme ou un outil équivalent.

4. Système de rail selon la revendication 1, **caractérisé en ce que** les moyens de fixation comprennent un clou de fixation, où chaque tête de fixation et chaque clou de fixation sont réalisés en tant qu'une partie intégrale.

5. Système de rail selon une des revendications 2 à 4, **caractérisé en ce qu'**une face de la tête de fixation se trouvant contre le mur dans une position d'utilisation, est pourvue d'une partie conique saillante pouvant s'introduire dans le mur.

6. Système de rail selon une des revendications précédentes, **caractérisé en ce que** la tête de fixation a une section au moins sensiblement ronde ou elliptique.

7. Système de rail selon une des revendications précédentes, **caractérisé en ce que** le système de rail comprend de plus des crochets de fixation, et où le rail est pourvu d'une deuxième encoche dans laquelle peuvent s'accrocher les crochets de fixation pourvus de tiges de fixation ou de câbles de fixation.

8. Système de rail selon la revendication 7, **caractérisé en ce que** les crochets de fixation sont chacun pourvus d'un verrouillage empêchant le crochet de fixation de se décrocher du rail.

9. Système de rail selon la revendication 8, **caractérisé en ce que** le verrouillage comprend un boîtier pouvant glisser le long d'une tige de fixation ou d'un câble de fixation, et étant pourvu d'une lèvre qui ainsi pénètre dans un espace qui est entouré par le crochet de fixation.
